# EUROPEAN PATENT APPLICATION

(11) **EP 4 556 268 A1**
(43) Date of publication of application: **21.05.2025**
(21) Application number: 24209473.8
(22) Date of filing: 29.10.2024
(51) Int. Cl.: B60H 1/00, B60K 1/00

(54) **VEHICLE DRIVE DEVICE**

(30) Priority: 15.11.2023 JP 2023194675; 23.04.2024 JP 2024069627
(71) Applicant: Aisin Corporation, Aichi 448-8650 (JP)
(72) Inventor: MUTSUURA, Keita, Kariya, 448-8650 (JP); SUYAMA, Daiki, Kariya, 448-8650 (JP); MAEDA, Takuyo, Kariya, 448-8650 (JP); KAKUDA, Kentaro, Kariya, 448-8650 (JP)
(74) Representative: Kramer Barske Schmidtchen Patentanwälte PartG mbB

(57) **Abstract**

A vehicle drive device that is mounted on a vehicle. The vehicle drive device includes: a traveling drive unit (10) that includes at least a motor (16) which outputs power that enables the vehicle to travel. The traveling drive unit is housed in a housing chamber (7) positioned on a front side in a traveling direction with respect to a partition wall (6a) that partitions a vehicle interior (3) in a state of being integrated with an air conditioning unit (D) that performs heating and cooling in the vehicle interior.

## Description

### TECHNICAL FIELD

This disclosure relates to a vehicle drive device mounted on a vehicle.

### BACKGROUND DISCUSSION

A vehicle is provided with an air conditioning system that performs heating and cooling of a vehicle interior in order to realize a comfortable space. As a technique related to such an air conditioning system, there is a technique described in JP 2018-150033A (Reference 1).

JP 2018-150033A (Reference 1) describes a vehicle air conditioning device. The vehicle air conditioning device includes a temperature adjusting unit that adjusts a temperature of air blown into a vehicle interior. The temperature adjusting unit is disposed in an outdoor space that is separated from the vehicle interior by a partition wall portion and in which a driving device that constitutes a power source for traveling is housed, in order to secure a space in the vehicle interior.

As described above, in JP 2018-150033 A (Reference 1), the temperature adjusting unit is disposed in the outdoor space to secure a space in the vehicle interior. However, for example, in an electric vehicle such as a hybrid electric vehicle (HEV), a plug-in hybrid electric vehicle (PHEV), a battery electric vehicle (BEV), or a fuel cell electric vehicle (FCEV) that includes a motor as a traveling drive source, a vehicle drive device including a motor is provided in a housing chamber (corresponding to the "outdoor space" described above) in front of a vehicle interior, and thus it is not easy to apply the technique described in JP 2018-150033 A (Reference 1). In addition, in a case where the temperature adjusting unit is mounted in the housing chamber, a dedicated mounting member or a vibration absorbing mechanism is required. Further, it is necessary to assemble the temperature adjusting unit to a vehicle body and to assemble the vehicle drive device to the vehicle body in separate steps, and thus it takes time to assemble the vehicle.

A need thus exists for a vehicle drive device that can easily be assembled to a vehicle body is required.

### SUMMARY

According to an aspect of this disclosure, there is provided a vehicle drive device that is mounted on a vehicle, the vehicle drive device including: a traveling drive unit that includes at least a motor which outputs power that enables the vehicle to travel, in which the traveling drive unit is housed in a housing chamber positioned on a front side in a traveling direction with respect to a partition wall that partitions a vehicle interior in a state of being integrated with an air conditioning unit that performs heating and cooling in the vehicle interior.

With such a feature configuration, since the traveling drive unit and the air conditioning unit are provided to be integrated with each other, it is possible to share a mounting member that fixes the traveling drive unit and the air conditioning unit to the vehicle. Therefore, it is possible to reduce the number of components used for fixing the traveling drive unit and the air conditioning unit to the vehicle, and to achieve cost reduction and weight reduction. In addition, since the traveling drive unit and the air conditioning unit can be integrally assembled to the vehicle, the assembly can be easily performed. Further, since the vehicle drive device and the air conditioning unit can be disposed close to each other, heat of the vehicle drive device can be efficiently used for air conditioning, and power consumption can be improved.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view showing a vehicle equipped with a vehicle drive device;
Fig. 2 is an exploded perspective view of the vehicle drive device;
Fig. 3 is a diagram showing a circuit configuration of an air conditioning unit;
Fig. 4 is a diagram showing a mounting form of the vehicle drive device on a suspension member;
Fig. 5 is a diagram showing disposition of a vehicle drive device and an air conditioning unit according to a first embodiment;
Fig. 6 is a diagram showing disposition of a vehicle drive device and an air conditioning unit according to a modification example of the first embodiment;
Fig. 7 is a diagram showing disposition of a vehicle drive device and an air conditioning unit according to a modification example of the first embodiment;
Fig. 8 is a diagram showing disposition of a vehicle drive device and an air conditioning unit according to a second embodiment; and
Fig. 9 is a diagram showing disposition of a vehicle drive device and an air conditioning unit according to a third embodiment.

### DETAILED DESCRIPTION

### First Embodiment

A vehicle drive device according to an embodiment disclosed here is configured to make a vehicle interior wider. Hereinafter, a vehicle drive device 1 of the present embodiment will be described. However, the vehicle drive device 1 is not limited to the following embodiments, and various modifications can be made without departing from the gist thereof.

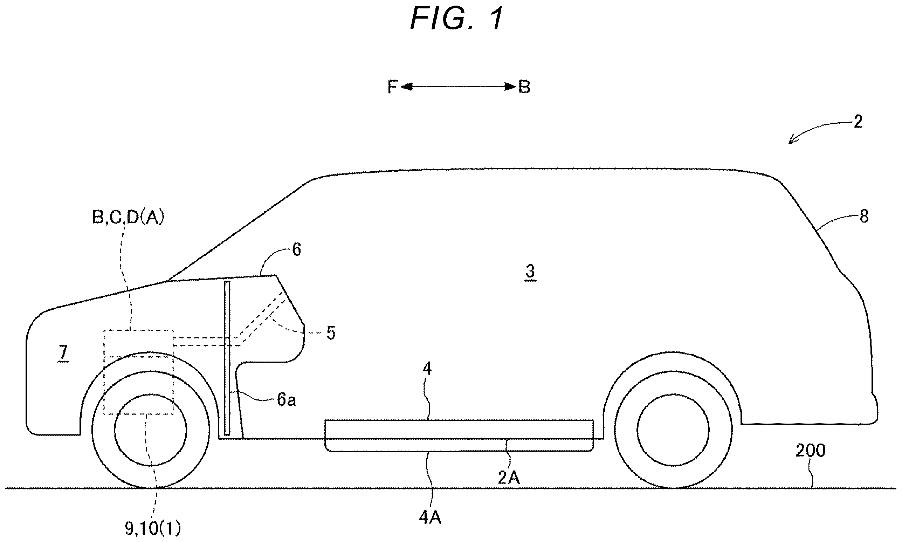

Fig. 1 shows a vehicle 2 on which the vehicle drive device 1 is mounted. In Fig. 1, a front side of the vehicle 2 in a traveling direction is indicated by "F", and a rear side of the vehicle 2 in the traveling direction is indicated by "B".

A battery 4 that stores power used for traveling of the vehicle 2 is provided at a bottom portion 2A of the vehicle 2. The battery 4 is covered with a battery cover 4A to face a road surface 200 in order to prevent damage caused by small stones or the like that are bounced up during the traveling of the vehicle 2. A vehicle interior 3 is provided in a vehicle body 8, and the vehicle interior 3 is partitioned from a motor room 7 (an example of a "housing chamber") by a partition wall 6a of a dashboard 6. Therefore, the vehicle drive device 1 is housed in the motor room 7 on the front side in the traveling direction with respect to the partition wall 6a of the dashboard 6 that partitions the vehicle interior 3.

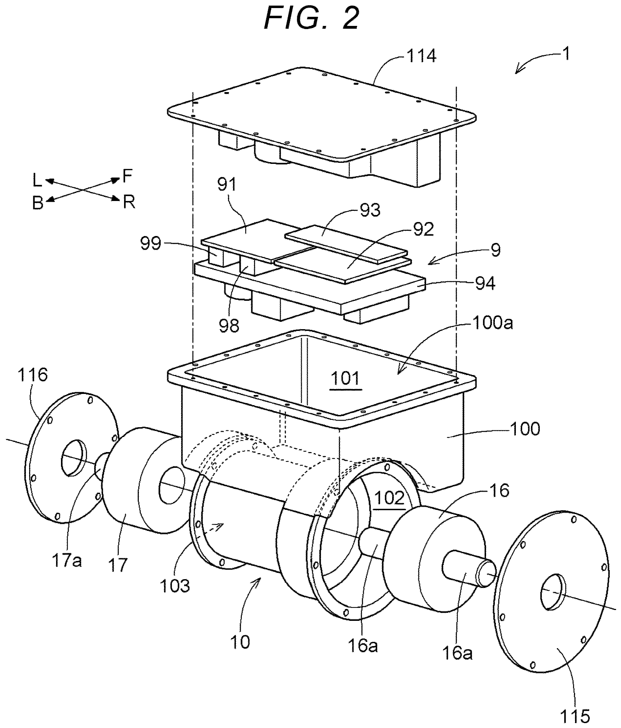

Fig. 2 shows an exploded perspective view of the vehicle drive device 1. In Fig. 2, in addition to "F" on the front side of the vehicle 2 in the traveling direction and "B" on the rear side of the vehicle 2 in the traveling direction, a right side when viewing the front side F of the vehicle 2 in the traveling direction is indicated by "R", and a left side when viewing the front side F of the vehicle 2 in the traveling direction is indicated by "L".

The vehicle drive device 1 of the present embodiment has a power source module 9 and a traveling drive unit 10. The power source module 9 is provided on an upper portion of the vehicle drive device 1, and the traveling drive unit 10 is provided on a lower portion of the vehicle drive device 1. Therefore, in the present embodiment, the power source module 9 and the traveling drive unit 10 are provided in a vertical line (to be arranged in a vertical direction) along a direction perpendicular to both the traveling direction and a vehicle width direction of the vehicle 2.

As shown in Fig. 2, the power source module 9 is configured to house an on-board charger (OBC) substrate 91, a motor drive substrate 92, and a control substrate 93 that controls the OBC substrate 91 and the motor drive substrate 92 in a housing 100. The power source module 9 has a first space 101. The OBC substrate 91, the motor drive substrate 92, and the control substrate 93 are different substrates from each other and are housed in the first space 101 in parallel with each other. In the following, a direction perpendicular to a plate surface of the OBC substrate 91 is referred to as a "vertical direction", a direction in which the control substrate 93 is viewed from the OBC substrate 91 and the motor drive substrate 92 along the vertical direction is referred to as an "up direction", an "up side", or the like, and a direction in which the OBC substrate 91 and the motor drive substrate 92 are viewed from the control substrate 93 is referred to as a "down direction", a "down side", or the like.

In the present embodiment, the OBC substrate 91 and the motor drive substrate 92 are provided side by side in a horizontal direction. The control substrate 93 is disposed to overlap the OBC substrate 91 and the motor drive substrate 92 in a case of being viewed along the vertical direction (in view in the vertical direction). The connection between the OBC substrate 91 and the control substrate 93 and the connection between the motor drive substrate 92 and the control substrate 93 are performed via a substrate-to-substrate connector (not shown).

At least an inverter and a converter are mounted on the OBC substrate 91. The inverter is supplied with alternating current power composed of an alternating current voltage by a commercial power source, and converts the alternating current power into direct current power including a direct current voltage. The converter is supplied with the direct current power generated by the inverter and boosts a voltage value of a direct current voltage constituting the direct current power supplied from the inverter to a direct current voltage of a voltage value required for charging the battery 4. In addition, the OBC substrate 91 is provided with a capacitor 98 that smooths the direct current voltage converted by the inverter and a capacitor 99 that smooths the direct current voltage converted by the converter.

A drive inverter that controls at least a drive current for driving a motor 16 is mounted on the motor drive substrate 92. In addition, a control portion that controls the inverter and the converter is mounted on the control substrate 93.

The OBC substrate 91, the motor drive substrate 92, the capacitor 98, and the capacitor 99 are provided to face a cooling plate 94 through which a cooling liquid from a cooling liquid module C, which will be described later, flows. Accordingly, the OBC substrate 91, the motor drive substrate 92, the capacitor 98, and the capacitor 99 can be cooled.

The traveling drive unit 10 includes at least the motor 16 that outputs power with which the vehicle 2 can travel. The motor 16 is driven by the motor drive substrate 92. The vehicle 2 travels based on the rotational force output from the motor 16. In the present embodiment, the traveling drive unit 10 also includes a gear mechanism 17 described below.

The housing 100 has a second space 102 and a third space 103 partitioned from the first space 101. The second space 102 and the third space 103 are positioned below the first space 101. The motor 16 is housed in the second space 102, and the gear mechanism 17 that reduces and outputs the rotation of the motor 16 is housed in the third space 103. The housing 100 has an opening 100a on an upper side of the first space 101, and the OBC substrate 91, the motor drive substrate 92, and the control substrate 93 are housed in the first space 101 from the opening 100a. The opening 100a is closed by a lid 114, and the first space 101 is a closed space.

The second space 102 is a closed space in which the motor 16 is housed from the side and which is closed by a motor cover 115 fastened by bolts (not shown). Motor shafts 16a extend from the motor 16 to both sides along the rotation axis, and one motor shaft 16a penetrates the motor cover 115 and is exposed to the outside of the housing 100. The other motor shaft 16a penetrates up to the third space 103. The third space 103 is a closed space in which the gear mechanism 17 is housed from the side and which is closed by a gear cover 116 fastened by bolts (not shown). The other motor shaft 16a extending from the second space 102 is connected to the gear mechanism 17, and the rotation of the motor 16 is input via the motor shaft 16a. The gear mechanism 17 reduces the rotation of the motor 16 and outputs the rotation from a gear shaft 17a. The gear shaft 17a penetrates the gear cover 116 and is exposed to the outside of the housing 100.

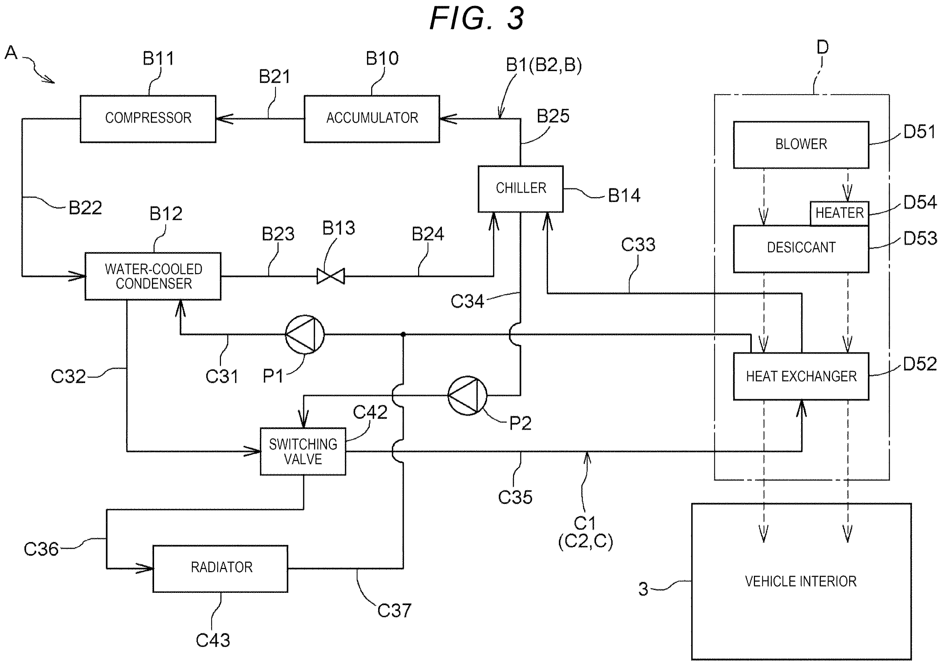

Fig. 3 shows a circuit configuration of an air conditioning system A including an air conditioning unit D. The air conditioning system A is mounted on the vehicle 2 and includes a refrigerant module B, a cooling liquid module C, and the air conditioning unit D. The refrigerant module B is provided with a refrigerant manifold B2 including a refrigerant flow path B1 through which a refrigerant flows. In addition, the cooling liquid module C is provided with a cooling liquid manifold C2 including a cooling liquid flow path C1 through which the cooling liquid heat-exchanged with the air conditioning unit D flows. Here, the manifold is a flow path housing in which a plate member is laminated and sealed on a housing body in which the refrigerant flow path B1 or the cooling liquid flow path C1 is engraved. The flow path housing is formed of a metal material having high thermal conductivity including aluminum.

A refrigerant such as hydrofluorocarbon (HFC) or hydrofluoroolefin (HFO) flows through the refrigerant flow path B1, and cooling water such as an antifreeze liquid or a long-life coolant, which is mainly composed of ethylene glycol, or a cooling liquid composed of an insulating oil such as paraffin-based oil flows through the cooling liquid flow path C1.

As shown in Fig. 3, the refrigerant is circulated through a water-cooled condenser B12 as a condenser and a chiller B14 as an evaporator in the refrigerant flow path B1. The refrigerant module B is configured to allow the refrigerant to flow through a refrigerant flow path B1 between an accumulator B10, a compressor B11, the water-cooled condenser B12, an expansion valve B13, and the chiller B14.

The accumulator B10 stores a liquid refrigerant and performs gas-liquid separation of the stored refrigerant. The gaseous refrigerant separated by the accumulator B10 flows through a first refrigerant passage B21 and is sent to the compressor B11.

The compressor B11 compresses the refrigerant from the accumulator B10. As a result, the refrigerant becomes a high-temperature compressed gas. The compressor B11 sends the refrigerant, which is the high-temperature compressed gas, to the water-cooled condenser B12 through the second refrigerant passage B22. Therefore, the compressor B11 pumps the refrigerant from the accumulator B10 to the water-cooled condenser B12.

The refrigerant that has passed through the compressor B11 flows through the water-cooled condenser B12. The water-cooled condenser B12 is configured such that the cooling liquid flows thereinto from the first cooling liquid flow path C31 and the cooling liquid flows out from the second cooling liquid flow path C32. The first cooling liquid flow path C31 and the second cooling liquid flow path C32 are configured separately from the second refrigerant passage B22. The refrigerant from the second refrigerant passage B22 is condensed and liquefied by heat being taken away by the cooling liquid. The liquefied refrigerant is sent to a third refrigerant passage B23. The third refrigerant passage B23 is also configured to be separate from the first cooling liquid flow path C31 and the second cooling liquid flow path C32, similarly to the second refrigerant passage B22.

In the expansion valve B13, the refrigerant (liquefied refrigerant) flowing through the third refrigerant passage B23 is expanded and turned into a misty state at a low temperature and a low pressure. The mist-like refrigerant is sent to a fourth refrigerant passage B24.

The refrigerant flows through the chiller B14 via the fourth refrigerant passage B24. The refrigerant that is expanded by the expansion valve B13 and is mist-like at a low temperature and a low pressure flows through the fourth refrigerant passage B24, and the refrigerant is sent to the chiller B14. The chiller B14 is configured such that the cooling liquid, which has been subjected to heat exchange in the heat exchanger D52, flows into the chiller B14 from the third cooling liquid flow path C33, and the cooling liquid flows out of the chiller B14 from the fourth cooling liquid flow path C34. The third cooling liquid flow path C33 and the fourth cooling liquid flow path C34 are configured separately from the fourth refrigerant passage B24. In the chiller B14, the heat of the cooling liquid is taken away by the mist-like refrigerant and the refrigerant is evaporated. The refrigerant that has evaporated and vaporized flows through a fifth refrigerant passage B25 to the accumulator B10.

In the cooling liquid flow path C1, a cooling liquid that performs heat exchange with the refrigerant in the water-cooled condenser B12 and the chiller B14 flows. The cooling liquid module C is configured to allow the cooling liquid to flow between the water-cooled condenser B12, the chiller B14, a switching valve C42, a radiator C43, and a heat exchanger D52 via the cooling liquid flow path C1 by a first pump P1 and a second pump P2.

As described above, the water-cooled condenser B12 is configured such that the cooling liquid flows thereinto from the first cooling liquid flow path C31 and the cooling liquid flows out from the second cooling liquid flow path C32. The first pump P1 is provided in the first cooling liquid flow path C31, and the cooling liquid is sent out by the first pump P1.

The switching valve C42 is disposed in the cooling liquid flow path C1 and is configured to allow the cooling liquid to flow from the water-cooled condenser B12 and the chiller B14. In the switching valve C42, the cooling liquid is sent from the water-cooled condenser B12 via the second cooling liquid flow path C32, and the cooling liquid is sent from the chiller B14 via the fourth cooling liquid flow path C34. The second pump P2 is provided in the fourth cooling liquid flow path C34, and the cooling liquid is sent from the chiller B14 to the switching valve C42 by the second pump P2.

The switching valve C42 is configured to send the cooling liquid to a fifth cooling liquid flow path C35 and a sixth cooling liquid flow path C36. The cooling liquid sent from the switching valve C42 to the fifth cooling liquid flow path C35 flows through the heat exchanger D52. The cooling liquid sent to the heat exchanger D52 is configured to be sent to the water-cooled condenser B12 via the first cooling liquid flow path C31 and to be sent to the chiller B14 via the third cooling liquid flow path C33.

In addition, the cooling liquid sent from the switching valve C42 to the sixth cooling liquid flow path C36 flows through the radiator C43. In the radiator C43, the outside air and the cooling liquid are subjected to heat exchange, and the cooling liquid is cooled. The cooling liquid after heat exchange is sent to the first cooling liquid flow path C31 via a seventh cooling liquid flow path C37.

The switching valve C42 is configured to switch a flow state of the cooling liquid in the cooling liquid flow path C1 between a first state and a second state.

The first state is a state in which the cooling liquid is circulated in the water-cooled condenser B12. In the first state, the cooling liquid is circulated along the water-cooled condenser B12, the second cooling liquid flow path C32, the switching valve C42, the fifth cooling liquid flow path C35, the heat exchanger D52, and the first cooling liquid flow path C31 by the first pump P1. In this case, the cooling liquid may be caused to flow from the switching valve C42 to the sixth cooling liquid flow path C36 and return to the first cooling liquid flow path C31 via the radiator C43 and the seventh cooling liquid flow path C37.

The second state is a state in which the cooling liquid is circulated in the chiller B14. In the second state, the cooling liquid is circulated along the chiller B14, the fourth cooling liquid flow path C34, the switching valve C42, the fifth cooling liquid flow path C35, the heat exchanger D52, and the third cooling liquid flow path C33 by the second pump P2.

The switching valve C42 is switched between the first state and the second state by a control portion (not shown) of the air conditioning system A or an upper-level system of the air conditioning system A.

In addition, as described above, the cooling liquid from the cooling liquid module C is configured to flow through the cooling plate 94 provided in the power source module 9 of the vehicle drive device 1 (not shown).

The air conditioning unit D is configured to include a blower D51, a heat exchanger D52, a desiccant D53, and a heater D54, and can perform heating and cooling of the vehicle interior 3. The blower D51 sucks the outside air and sends the sucked outside air to the heat exchanger D52.

The heat exchanger D52 performs heat exchange between air and a cooling liquid for heating and cooling the vehicle interior 3. The air is the outside air sucked by the blower D51. In addition, the cooling liquid is introduced into the heat exchanger D52 through the fifth cooling liquid flow path C35 as described above, and the cooling liquid is sent to one or both of the first cooling liquid flow path C31 and the third cooling liquid flow path C33 according to the state of the switching valve C42. Therefore, in the heat exchanger D52, heat exchange is performed between the outside air sent from the blower D51 and the cooling liquid supplied through the fifth cooling liquid flow path C35, and the air subjected to the heat exchange is introduced into the vehicle interior 3. Specifically, in a case where the outside air is cooled in the heat exchanger D52, cold air is introduced into the vehicle interior 3, and in a case where the outside air is heated in the heat exchanger D52, warm air is introduced into the vehicle interior 3. Accordingly, it is possible to cool or heat the vehicle interior 3.

The desiccant D53 adsorbs moisture contained in moisture-containing air to generate heated and dried air. The desiccant D53 functions as an adsorption portion that adsorbs moisture, and can be configured by using an adsorbent such as zeolite, silica gel, or activated carbon. The desiccant D53 is provided between the blower D51 and the heat exchanger D52. Therefore, the outside air sent from the blower D51 is discharged to the heat exchanger D52 through the desiccant D53.

The heater D54 evaporates the moisture adsorbed in the desiccant D53 to generate cooled and humidified air. The heater D54 functions as a heating portion that evaporates the moisture adsorbed in the desiccant D53. The heater D54 is assembled to, for example, the desiccant D53 (is configured to be integrated with the desiccant D53). In this case, the desiccant D53 is heated by the heater D54, and thus the moisture adsorbed in the desiccant D53 evaporates.

Of course, the heater D54 may be provided at a position separated from the desiccant D53 (may be provided separately from the desiccant D53) on the upstream side of the desiccant D53 (between the blower D51 and the desiccant D53) without being assembled to the desiccant D53. In this case, the air from the blower D51 is heated by the heater D54, and the heated air is supplied to the desiccant D53, so that the moisture adsorbed in the desiccant D53 evaporates. The air supplied to the desiccant D53 is humidified by the moisture evaporated from the desiccant D53, and cooled and humidified air is generated. The heating portion that evaporates the moisture adsorbed in the desiccant D53 may be an air heating device other than the heater D54.

In a case where the moisture-containing air is supplied from the blower D51 to the desiccant D53 in a state in which the moisture is not adsorbed in the desiccant D53, the desiccant D53 adsorbs the moisture in the moisture-containing air to reduce the humidity of the moisture-containing air. As a result, the moisture-containing air supplied to the desiccant D53 is discharged to the heat exchanger D52 as dry air from which moisture has been removed by the desiccant D53.

Meanwhile, in a case where the air heated by the heater D54 or the high-temperature air from the blower D51 is supplied to the desiccant D53 in a state in which the moisture is adsorbed in the desiccant D53, the desiccant D53 desorbs the adsorbed moisture. The high-temperature air is humidified by the desorbed moisture. Accordingly, the high-temperature air supplied to the desiccant D53 is discharged to the heat exchanger D52 as wet air humidified by the desiccant D53.

The heat exchanger D52 performs heat exchange between the heated and dried air or the cooled and humidified air and the cooling liquid to generate air for cooling the vehicle interior or air for heating a vehicle interior. Therefore, in the heat exchanger D52, the dry air and the cooling liquid introduced through the fifth cooling liquid flow path C35 are subjected to heat exchange to generate the air for cooling the vehicle interior. In addition, in the heat exchanger D52, heat exchange is performed between the wet air and the cooling liquid introduced through the fifth cooling liquid flow path C35 to generate the air for heating the vehicle interior. Further, in the heat exchanger D52, heat exchange can be performed between the dry air and the cooling liquid introduced through the fifth cooling liquid flow path C35 to generate the air for heating the vehicle interior. In this case, for example, in a case where a defroster function is used in winter or the like, the dehumidified and heated air can be supplied to the vehicle interior 3. By introducing the air for cooling the vehicle interior and the air for heating the vehicle interior into the vehicle interior 3 via a duct 5, it is possible to adjust the humidity of the vehicle interior 3. In addition to the duct 5, the vehicle 2 may be provided with other ducts (not shown) so that the air can be introduced into the front and the feet of the driver, and the windshield.

Here, as described above, the switching valve C42 is configured such that the cooling liquid from the water-cooled condenser B12 and the cooling liquid from the chiller B14 can flow. In a case where the cooling liquid from the water-cooled condenser B12 and the cooling liquid from the chiller B14 are compared, the temperature of the cooling liquid from the water-cooled condenser B12 is relatively higher than the temperature of the cooling liquid from the chiller B14. Therefore, in a case where the vehicle interior 3 is heated, the switching valve C42 is switched to the first state in which the cooling liquid is circulated to the water-cooled condenser B12, and in a case where the vehicle interior 3 is cooled, the switching valve C42 is switched to the second state in which the cooling liquid is circulated to the chiller B14.

In addition, the switching valve C42 is configured such that an opening degree can be changed to realize the first state and the second state at the same time. Therefore, in the switching valve C42, it is possible to mix the cooling liquid having a relatively high temperature from the water-cooled condenser B12 and the cooling liquid having a relatively low temperature from the chiller B14 and send the mixed cooling liquid to the fifth cooling liquid flow path C35. For example, in a case where the set temperature of the air conditioning of the vehicle interior 3 is high, it is preferable to reduce the ratio of the cooling liquid from the chiller B14 to the cooling liquid from the water-cooled condenser B12, and in a case where the set temperature of the air conditioning of the vehicle interior 3 is low, it is preferable to increase the ratio of the cooling liquid from the chiller B14 to the cooling liquid from the water-cooled condenser B12. In this way, by changing the opening degree of the switching valve C42 according to the set temperature of the air conditioning of the vehicle interior 3 and controlling a flow rate of the cooling liquid from the second cooling liquid flow path C32 and a flow rate of the cooling liquid from the fourth cooling liquid flow path C34, the temperature of the cooling liquid sent to the fifth cooling liquid flow path C35 is adjusted, and the temperature of the vehicle interior 3 can be adjusted to the set temperature of the air conditioning.

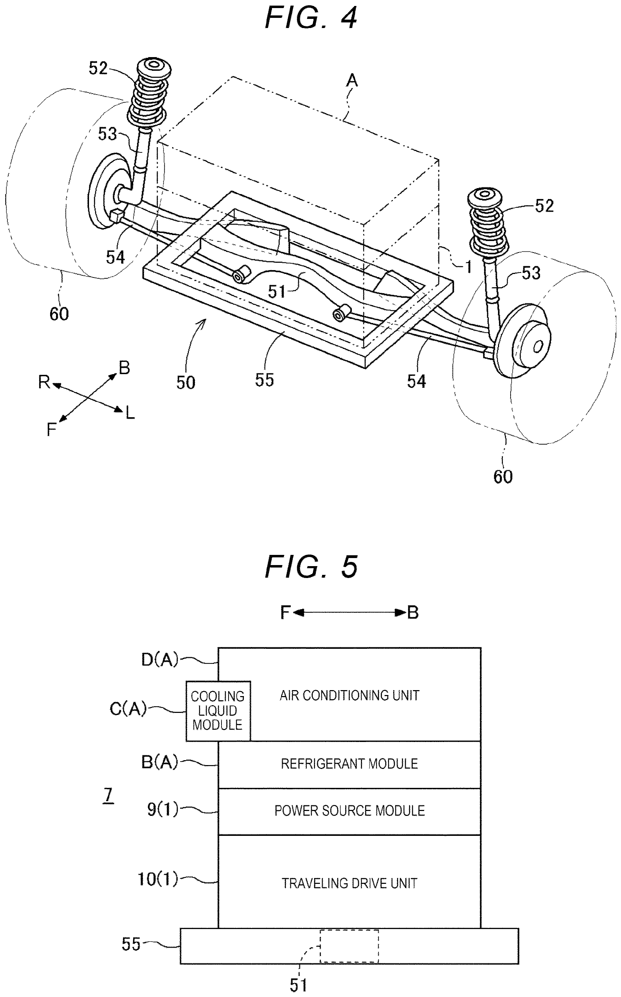

A suspension device 50 shown in Fig. 4 is provided in the vehicle 2. The suspension device 50 is connected and fixed to the vehicle body 8 and suspends the left and right front wheels (an example of a "wheel") 60. The suspension device 50 is configured to include a structural member such as a suspension member 51, a shock buffer member such as a spring 52, an energy absorbing member such as a shock absorber 53, and a posture control member such as a stabilizer 54. Therefore, the suspension member 51 is provided between the left and right front wheels 60 and the vehicle body 8. The suspension member 51 includes a frame 55 that is connected and fixed, and in the present embodiment, the vehicle drive device 1 including the traveling drive unit 10 is supported by the frame 55.

Fig. 5 shows a disposition example of the vehicle drive device 1 and the air conditioning unit D. The vehicle drive device 1 is integrated with the air conditioning unit D. Therefore, the traveling drive unit 10 is housed in the motor room 7 in a state of being integrated with the air conditioning unit D. To be more specific, the traveling drive unit 10 is housed in the motor room 7 on a front side in the traveling direction with respect to the partition wall 6a that partitions the vehicle interior 3, and the air conditioning unit D that performs heating and cooling of the vehicle interior 3 is housed in the motor room 7 in a state of being integrated with the traveling drive unit 10. In the present embodiment, as shown in Fig. 5, the vehicle drive device 1 and the air conditioning system A including the air conditioning unit D are integrated. Here, the term "integration" means a state in which the air conditioning system A is fixed to the vehicle drive device 1 with bolts or the like. In this case, it is also possible to fix the vehicle drive device 1 and the air conditioning system A by sandwiching an elastic member (for example, a rubber member) therebetween. The "integration" also includes making the materials of the vehicle drive device 1 and the air conditioning system A the same and forming both in the same case.

The traveling drive unit 10 is provided below the air conditioning unit D. Specifically, as shown in Fig. 5, in a state where the vehicle drive device 1 is supported by the suspension member 51 (including the frame 55), the refrigerant module B is fixed above the vehicle drive device 1, and the air conditioning unit D is fixed above the refrigerant module B. In addition, the cooling liquid module C is provided on a front side of the vehicle 2 in a traveling direction in the air conditioning unit D. Here, the refrigerant module B is integrated with at least one of the accumulator B10, the compressor B11, the water-cooled condenser B12, the expansion valve B13, and the chiller B14, and the refrigerant manifold B2 in which the refrigerant flow path B1 is formed. In addition, the cooling liquid module C is integrated with at least one of the first pump P1, the second pump P2, the water-cooled condenser B12, the chiller B14, and the switching valve C42, and the cooling liquid manifold C2 in which the cooling liquid flow path C1 is formed.

As described above, by integrating the vehicle drive device 1, and the refrigerant module B, the cooling liquid module C, and the air conditioning unit D, the overall size can be reduced as compared with a case where the refrigerant module B, the cooling liquid module C, and the air conditioning unit D are not integrated with the vehicle drive device 1. In addition, it is possible to easily perform and shorten the routing of the refrigerant flow path B1 through which the refrigerant flows and the cooling liquid flow path C1 through which the cooling liquid flows, between the refrigerant module B, the cooling liquid module C, and the air conditioning unit D. Therefore, it is possible to improve the power consumption. In addition, since the cooling liquid module C can be disposed in front of the vehicle 2, the distance to the radiator C43 to which the traveling wind is blown along with the traveling of the vehicle 2 can be shortened, and thus the cooling liquid flow path C1 can be simply routed. Further, although not shown, in a case where the water-cooled condenser B12, the expansion valve B13, and the chiller B14 are disposed in front of the vehicle 2, it is possible to prevent dew condensation in these.

In addition, since the cooling liquid module C and the power source module 9 can be brought close to each other, a pipe through which the cooling liquid circulating between the cooling liquid module C and the power source module 9 flows can be shortened, and the routing can be simplified.

### Modification Example of First Embodiment

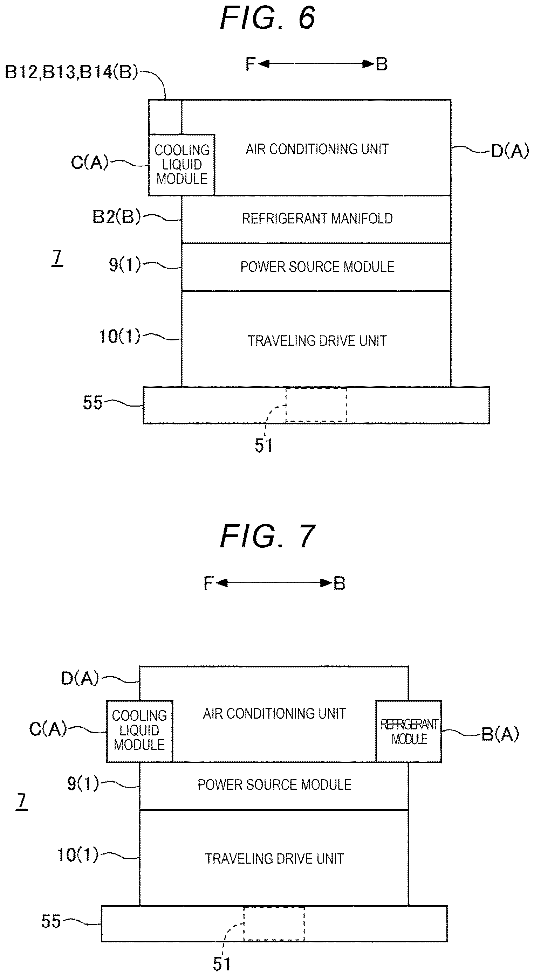

The water-cooled condenser B12, the expansion valve B13, and the chiller B14 may be provided between the traveling drive unit 10 and the air conditioning unit D, or may be provided at a portion different from the portion between the traveling drive unit 10 and the air conditioning unit D. In this case, as shown in Fig. 6, the refrigerant manifold B2 may be provided between the traveling drive unit 10 and the air conditioning unit D, and the water-cooled condenser B12, the expansion valve B13, and the chiller B14 may be provided on a side surface of the air conditioning unit D or the refrigerant manifold B2.

In addition, for example, as shown in Fig. 7, in a state where the vehicle drive device 1 is supported by the suspension member 51 (including the frame 55), the air conditioning unit D may be fixed above the vehicle drive device 1, the cooling liquid module C may be provided on the front side of the vehicle 2 in the traveling direction in the air conditioning unit D, and the refrigerant module B may be provided on the rear side of the vehicle 2 in the traveling direction in the air conditioning unit D.

Further, although not shown, in a state where the vehicle drive device 1 is supported by the suspension member 51 (including the frame 55), the air conditioning unit D may be fixed above the vehicle drive device 1, the cooling liquid module C may be provided on one of the right side and the left side in the air conditioning unit D, and the refrigerant module B may be provided on the other of the right side and the left side in the air conditioning unit D. In addition, the power source module 9 may be provided on any one of the front side, the rear side, the right side, or the left side in the traveling direction of the vehicle 2 in the traveling drive unit 10.

Of course, the refrigerant module B may be fixed above the vehicle drive device 1, the cooling liquid module C may be fixed above the refrigerant module B, and the air conditioning unit D may be fixed above the cooling liquid module C in a state where the vehicle drive device 1 is supported by the suspension member 51 (including the frame 55).

### Second Embodiment

Next, a vehicle drive device 1 of a second embodiment will be described. In the first embodiment, the vehicle drive device 1 is configured to include the power source module 9 and the traveling drive unit 10. The second embodiment is different from the first embodiment in that the vehicle drive device 1 is configured to include a power conversion device 20 and a traveling drive unit 10. Hereinafter, a second embodiment of the vehicle drive device 1 will be described mainly with differences from the first embodiment.

The power conversion device 20 includes a power source module 9 and an air conditioning unit power source module 30. As in the first embodiment, the power source module 9 includes an OBC substrate 91 that converts alternating current power from a commercial power source into direct current power that can be charged in a battery 4, a motor drive substrate 92 that controls at least a drive current for driving a motor 16, and a control substrate 93 that controls an inverter and a converter mounted on the OBC substrate 91. Therefore, the power source module 9 is configured to supply power to the battery 4 and supply power to the motor 16.

Meanwhile, the air conditioning unit power source module 30 converts the power from the battery 4 into power suitable for driving the air conditioning unit D and supplies the power to the air conditioning unit D. Specifically, the air conditioning unit power source module 30 steps down the voltage value of the direct current voltage of the battery 4 to a direct current voltage of a predetermined voltage value and supplies the direct current voltage to the air conditioning unit D. From the viewpoint of power conversion efficiency, it is suitable that the air conditioning unit power source module 30 is configured by using, for example, a synchronous rectification type switching regulator (DC/DC converter) or a diode rectification type switching regulator (DC/DC converter).

As described above, the power conversion device 20 including the power source module 9 that supplies power to the battery 4 and supplies power to the motor 16, and the air conditioning unit power source module 30 that supplies power to the air conditioning unit D is configured to supply power to the air conditioning unit D.

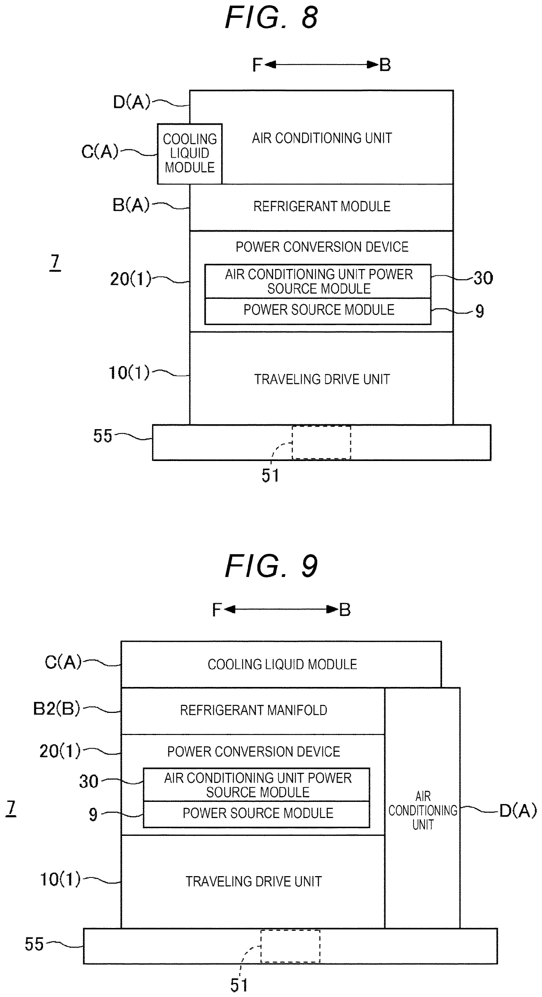

Fig. 8 shows a disposition example of the vehicle drive device 1 having the power conversion device 20 and the traveling drive unit 10, and the air conditioning unit D. As in the first embodiment, the vehicle drive device 1 is housed in a motor room 7 in a state in which the traveling drive unit 10 is integrated with the air conditioning unit D. In addition, the traveling drive unit 10 in the present embodiment is integrated with the power conversion device 20. As in the first embodiment, the traveling drive unit 10 is supported by a suspension member 51 (including a frame 55) provided between left and right front wheels 60 and a vehicle body 8, and the power conversion device 20 is disposed above the traveling drive unit 10. A refrigerant module B is fixed above the power conversion device 20, and the air conditioning unit D is fixed above the refrigerant module B. In addition, the cooling liquid module C is provided on a front side of the vehicle 2 in a traveling direction in the air conditioning unit D. Therefore, the vehicle drive device 1 and an air conditioning system A are disposed in a vertical line (to be arranged in the vertical direction) in the order of the traveling drive unit 10, the power conversion device 20, the refrigerant module B, the air conditioning unit D, and the cooling liquid module C from the suspension member 51 (including the frame 55).

In the power conversion device 20, the power source module 9 is provided on the side of the traveling drive unit 10, and the air conditioning unit power source module 30 is provided on the side of the air conditioning unit D. That is, the power source module 9 and the air conditioning unit power source module 30 are provided in a vertical line (to be arranged in a vertical direction) such that the power source module 9 is positioned below the air conditioning unit power source module 30. Accordingly, the traveling drive unit 10 and the power source module 9 can be disposed close to each other, and the air conditioning unit D and the air conditioning unit power source module 30 can be disposed close to each other. Therefore, since the cable that electrically connects the traveling drive unit 10 and the power source module 9 to each other can be shortened and the cable that electrically connects the air conditioning unit D and the air conditioning unit power source module 30 to each other can be shortened, power loss in each cable can be reduced, and the vehicle drive device 1 and the air conditioning system A can be reduced in size. Furthermore, it is possible to easily perform routing of cables in the traveling drive unit 10 and the power source module 9 and routing of cables in the air conditioning unit D and the air conditioning unit power source module 30.

In addition, as in the first embodiment, the OBC substrate 91, the motor drive substrate 92, the capacitor 98, and the capacitor 99 are provided to face the cooling plate 94 through which the cooling liquid from the cooling liquid module C flows, and are cooled by heat exchange with the cooling liquid, but the air conditioning unit power source module 30 may also be provided to face a second cooling plate (not shown) through which the cooling liquid from the cooling liquid module C flows. Accordingly, the air conditioning unit power source module 30 can be cooled by heat exchange with the cooling liquid.

Although not shown, similarly to the disposition example shown in Fig. 6, a refrigerant manifold B2 may be provided between the vehicle drive device 1 including the power conversion device 20 and the traveling drive unit 10 disposed in a vertical line and the air conditioning unit D, instead of the refrigerant module B, and the water-cooled condenser B12, the expansion valve B13, and the chiller B14 may be provided on the side surface of the air conditioning unit D or the refrigerant manifold B2. In addition, similarly to the disposition example shown in Fig. 7, in a state in which the vehicle drive device 1 including the power conversion device 20 and the traveling drive unit 10 disposed in a vertical line with respect to the suspension member 51 (including the frame 55) is supported, the air conditioning unit D may be fixed above the power conversion device 20, the cooling liquid module C may be provided on the front side of the vehicle 2 in the traveling direction in the air conditioning unit D, and the refrigerant module B may be provided on the rear side of the vehicle 2 in the traveling direction in the air conditioning unit D. Furthermore, in a state where the vehicle drive device 1 including the power conversion device 20 and the traveling drive unit 10 disposed in a vertical line with respect to the suspension member 51 (including the frame 55) is supported, the air conditioning unit D may be fixed above the power conversion device 20, the cooling liquid module C may be provided on one of the right side and the left side in the air conditioning unit D, and the refrigerant module B may be provided on the other of the right side and the left side in the air conditioning unit D. In addition, the power conversion device 20 may be provided on any of a front side, a rear side, a right side, or a left side of in the traveling direction of the vehicle 2 in the traveling drive unit 10. Of course, in a state where the vehicle drive device 1 including the power conversion device 20 and the traveling drive unit 10 disposed in a vertical line with respect to the suspension member 51 (including the frame 55) is supported, the refrigerant module B may be fixed above the power conversion device 20, the cooling liquid module C may be fixed above the refrigerant module B, and the air conditioning unit D may be fixed above the cooling liquid module C.

### Third Embodiment

In the second embodiment, the traveling drive unit 10, the power conversion device 20, the refrigerant module B, the air conditioning unit D, and the cooling liquid module C are disposed in order from the suspension member 51 (including the frame 55) in a vertical line (arranged in the vertical direction). However, for example, as shown in Fig. 9, the traveling drive unit 10, the power conversion device 20, and the refrigerant manifold B2 provided in a vertical line (arranged in the vertical direction) can be housed on the front side of the vehicle 2 in the traveling direction in the motor room 7, and the traveling drive unit 10 and the air conditioning unit D can be integrated and housed such that the air conditioning unit D is positioned on the rear side of the vehicle 2 in the traveling direction. In this case, the air conditioning unit D and the air conditioning unit power source module 30 can be disposed closer to each other than in the disposition example of Fig. 8. Therefore, it is possible to further reduce the power loss in the cable that electrically connects the air conditioning unit D and the air conditioning unit power source module 30 to each other. In addition, by providing the cooling liquid module C over the refrigerant manifold B2 and the air conditioning unit D, the pipe length of the flow path through which the cooling liquid flows from the cooling liquid module C to each of the water-cooled condenser B12, the chiller B14, and the heat exchanger D52 can be shortened, so that the refrigerant module B, the cooling liquid module C, and the air conditioning unit D can be reduced in size.

### Other Embodiments

Next, other embodiments of the vehicle drive device 1 will be described.

In the above-described embodiment, the traveling drive unit 10 is provided below the air conditioning unit D. However, the traveling drive unit 10 may be provided at the same height as the air conditioning unit D or may be provided above the air conditioning unit D.

In the above-described embodiment, the traveling drive unit 10 is supported by the suspension member 51 provided between the front wheel 60 and the vehicle body 8. However, the traveling drive unit 10 may be supported at a portion different from the suspension member 51, that is, a predetermined portion of the vehicle body 8.

In the second embodiment and the third embodiment, the power conversion device 20 is configured to include the power source module 9 and the air conditioning unit power source module 30. However, the power conversion device 20 can also be configured to include the air conditioning unit power source module 30 without including the power source module 9. In this case, the power source module 9 may be provided separately from the power conversion device 20.

In the second embodiment and the third embodiment, the power source module 9 and the air conditioning unit power source module 30 are provided in a vertical line (to be arranged in the vertical direction) such that the power source module 9 is positioned below the air conditioning unit power source module 30. However, the power source module 9 and the air conditioning unit power source module 30 may be provided in a vertical line (to be arranged in a vertical direction) such that the power source module 9 is above the air conditioning unit power source module 30.

In addition, for example, as in the third embodiment, in a case where the traveling drive unit 10 and the air conditioning unit D are integrally housed so that the traveling drive unit 10, the power conversion device 20, and the refrigerant manifold B2, which are provided in a vertical line (to be arranged in a vertical direction), are housed on the front side of the vehicle 2 in the traveling direction in the motor room 7, and the air conditioning unit D is positioned on the rear side of the vehicle 2 in the traveling direction, in the power conversion device 20, the power source module 9 may be disposed on the front side of the vehicle 2 in the traveling direction, and the air conditioning unit power source module 30 may be disposed on the rear side of the vehicle 2 in the traveling direction. In this way, the power source module 9 of the power conversion device 20 and the air conditioning unit power source module 30 are disposed according to the disposition relationship between the traveling drive unit 10 and the air conditioning unit D, so that the cables used for the respective electrical connections can be shortened. Therefore, it is possible to reduce power loss and to easily perform cable routing.

### Summary of Embodiment

Hereinafter, an outline of the vehicle drive device 1 described above will be described.
(1) A vehicle drive device 1 is a vehicle drive device 1 mounted on a vehicle 2, and includes a traveling drive unit 10 that includes at least a motor 16 which outputs power that enables the vehicle 2 to travel, and the traveling drive unit 10 is housed in a motor room 7 (housing chamber) positioned on a front side in a traveling direction with respect to a partition wall 6a that partitions a vehicle interior 3 in a state of being integrated with an air conditioning unit D that performs heating and cooling in the vehicle interior 3.
   According to the present configuration, since the traveling drive unit 10 and the air conditioning unit D are provided to be integrated with each other, it is possible to share a fixing tool that fixes the traveling drive unit 10 and the air conditioning unit D to the vehicle 2. Therefore, it is possible to reduce the number of components used for fixing the traveling drive unit 10 and the air conditioning unit D to the vehicle 2, and to achieve cost reduction and weight reduction. In addition, since the traveling drive unit 10 and the air conditioning unit D can be integrally assembled to the vehicle 2, the assembly can be easily performed. Further, since the vehicle drive device 1 and the air conditioning unit D can be disposed close to each other, heat of the vehicle drive device 1 can be efficiently used for air conditioning, and power consumption can be improved.
(2) In the vehicle drive device 1 according to (1), it is preferable that the traveling drive unit 10 is provided below the air conditioning unit D.
   According to the present configuration, the air conditioning unit D can be disposed in the space above the traveling drive unit 10. Therefore, it is possible to widen the vehicle interior 3 as compared with a case where the air conditioning unit D is provided in the vehicle interior 3 while effectively utilizing the motor room 7.
(3) In the vehicle drive device 1 according to (2), it is preferable that a refrigerant manifold B2 including a refrigerant flow path B1 through which a refrigerant flows is provided between the traveling drive unit 10 and the air conditioning unit D.
   According to the present configuration, since the refrigerant flow path B1 is disposed adjacent to the air conditioning unit D, the pipe length of the flow path through which the refrigerant flows can be shortened. Therefore, it is possible to further reduce the cost and weight.
(4) In the vehicle drive device 1 according to (1) to (3), it is preferable that the traveling drive unit 10 is supported by a suspension member 51 provided between a front wheel 60 (wheel) and a vehicle body 8.
   According to the present configuration, since the traveling drive unit 10 and the air conditioning unit D can be integrally supported by using the existing suspension member 51, it is not necessary to separately provide a fixing tool for fixing the traveling drive unit 10 and the air conditioning unit D. Therefore, an increase in cost and an increase in weight can be suppressed.
(5) In the vehicle drive device 1 according to any one of (1) to (3), it is preferable that the traveling drive unit 10 is integrated with the power conversion device 20.
   According to the present configuration, since the traveling drive unit 10 and the power conversion device 20 can be disposed close to each other, a cable that electrically connects the traveling drive unit 10 and the power conversion device 20 to each other can be shortened. Therefore, it is possible to reduce the weight of the cable and to reduce the power loss in the cable. In addition, it is possible to easily route the cable.
(6) In the vehicle drive device 1 according to (5), it is preferable that the power conversion device 20 allows power to be supplied to the air conditioning unit D.

According to the present configuration, since the traveling drive unit 10 is integrated with the power conversion device 20 and the traveling drive unit 10 is integrated with the air conditioning unit D, the air conditioning unit D and the power conversion device 20 can be disposed close to each other. Therefore, it is possible to shorten a cable that electrically connects the air conditioning unit D and the power conversion device 20 to each other. In addition, it is possible to reduce the weight of the cable and to reduce the power loss in the cable. Furthermore, it is possible to easily perform routing of the cable.

### Industrial Applicability

The technique according to the present disclosure can be used for a vehicle drive device mounted on a vehicle.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A vehicle drive device (1) that is mounted on a vehicle (2), the vehicle drive device comprising:
a traveling drive unit (10) that includes at least a motor (16) which outputs power that enables the vehicle to travel,
wherein the traveling drive unit is housed in a housing chamber (7) positioned on a front side in a traveling direction with respect to a partition wall (6a) that partitions a vehicle interior (3) in a state of being integrated with an air conditioning unit (D) that performs heating and cooling in the vehicle interior.

2. The vehicle drive device (1) according to claim 1,
wherein the traveling drive unit (10) is provided below the air conditioning unit (D).

3. The vehicle drive device (1) according to claim 1or2,
wherein a refrigerant manifold (B2) including a refrigerant flow path (B1) through which a refrigerant flows is provided between the traveling drive unit (10) and the air conditioning unit (D).

4. The vehicle drive device (1) according to any one of claims 1 to 3,
wherein the traveling drive unit (10) is supported by a suspension member (51) provided between a wheel (60) and a vehicle body (8).

5. The vehicle drive device (1) according to any one of claims 1 to 4,
wherein the traveling drive unit (10) is integrated with a power conversion device (20).

6. The vehicle drive device (1) according to claim 5,
wherein the power conversion device (20) allows power to be supplied to the air conditioning unit (D).

7. The vehicle drive device (1) according to any one of claims 1 to 5,
wherein the air conditioning unit (D) includes a blower (D51) that sucks outside air, and a heat exchanger (D52) that performs heat exchange between the outside air and a cooling liquid.

8. The vehicle drive device (1) according to claim 7,
wherein a cooling liquid module (C) including a cooling liquid flow path (C1) through which the cooling liquid flows is disposed on a front side of the air conditioning unit (D) in the traveling direction.

9. The vehicle drive device (1) according to claim 5 or 6,
wherein the power conversion device (20) includes a power source module (9) that supplies power to the motor (16), and an air conditioning unit power source module (30) that supplies power to the air conditioning unit (D).

10. The vehicle drive device (1) according to any one of claims 1 to 9,
wherein the air conditioning unit (D) is disposed on a side surface of the traveling drive unit (10).

11. The vehicle drive device (1) according to any one of claims 1 to 10,
wherein the traveling drive unit (10) is housed on the front side in the traveling direction, and integrated with the air conditioning unit (D) in a state where the air conditioning unit is positioned on a rear side of the traveling drive unit in the traveling direction.
